# EUROPEAN PATENT APPLICATION

(11) **EP 2 075 438 A1**
(43) Date of publication of application: **01.07.2009**
(21) Application number: 07828174.8
(22) Date of filing: 04.09.2007
(51) Int. Cl.: F02C 7/18, F01K 23/10, F02C 6/18, F02C 7/143, F02C 7/224

(54) **GAS TURBINE**

(30) Priority: 27.09.2006 JP 2006263093
(71) Applicant: Mitsubishi Heavy Industries, Ltd., Tokyo 108-8215 (JP)
(72) Inventor: ISHIGURO, Tatsuo, Hyogo-ken 676-8686 (JP); TANAKA, Katsunori, Hyogo-ken 676-8686 (JP); KONISHI, Tetsu, Hyogo-ken 676-8686 (JP)
(74) Representative: Henkel, Feiler & Hänzel
(86) International application number: PCT/JP2007/067179
(87) International publication number: WO 2008/038497

(57) **Abstract**

A gas turbine, in which compressed air that is compressed by a compressor (11) is mixed with fuel in a combustor (12), the mixture is burned to produce combustion gas, and the combustion gas is provided to a turbine (13) to produce rotative power, includes: a pressurizing unit (41) that pressurizes some of the compressed air that is compressed by the compressor (11); a combustor cooling unit (42) that cools the combustor (12) with the compressed air that is pressurized by the pressurizing unit (41); and a compressed air circulation line (46) that provides the compressed air to the casing of the combustor (12). In the gas turbine, the combustor can be cooled by minimizing pressure loss of the compressed air, and degradation of the power efficiency can be prevented.

## Description

### TECHNICAL FIELD

The present invention generally relates to a control apparatus, and specifically relates to a control apparatus for controlling a gas turbine.

### BACKGROUND ART

For example, a gas turbine includes a compressor, a combustor, and a turbine. Air is taken into the gas turbine through an air inlet and the air is compressed by the compressor to produce compressed air that is at high temperature and high pressure. In the combustor, the compressed air is mixed with fuel, and the mixture is burned to produce combustion gas that is at high temperature and high pressure. The combustion gas is used to drive the turbine that in turn drives a generator.

In such a gas turbine, when combustion temperature in a combustor thereof gets high, nitric oxides (NOx) in exhaust gas increases. Therefore, a cooling device is provided in the combustor. A steam cooling method, an air cooling method, and a recovery type air cooling method are available in a cooling device for a conventional combustor.

In a cooling device employing a steam cooling method, a combustor is cooled by providing steam generated in a heat recovery boiler to a cooling passage formed within the wall of the inner liner that constitutes the combustor, and after the steam cools the combustor, the steam is recovered in a steam turbine. Thus, the cooling device does not use air for cooling the combustor. As a result, combustion air can be sufficiently secured, emission level of NOx can be reduced, and steam that has a low specific heat is used for cooling. Consequently, the cooling device has a high cooling capacity and can be applied to an ultra high temperature gas turbine.

In a cooling device employing an air cooling method, a part of compressed air that is compressed by a compressor is extracted from a casing. The compressed air that is extracted therefrom is provided to a cooling passage formed within the wall of the inner liner, thus, a combustor is cooled. After the air cools the combustor, the air is ejected to an exhaust gas passage. Thus, the combustor can be cooled by using a simple structure. In a cooling device employing a recovery type air cooling method, a flow sleeve is provided on the outer peripheral of the wall of a combustor. The combustor is cooled by flowing compressed air that is compressed by a compressor from casing air to an annular passage of the flow sleeve. After the air cools the combustor, the air is provided to the combustor. Thus, the air used for cooling the combustor is recovered as combustion air. Therefore, combustion air can be sufficiently secured and emission level of NOx can be reduced.

A cooling device for a gas turbine is disclosed in Patent Document 1.

Patent Document 1: Japanese Patent Application Laid-open No. 2004-169584

### DISCLOSURE OF INVENTION

### PROBLEM TO BE SOLVED BY THE INVENTION

Various gas turbine cooling devices described above, however, have following problems. In a cooling device employing a steam cooling method, steam generated at the heat recovery boiler cools the combustor. Thus, an ancillary facility such as a steam pipe that circulates steam between the gas turbine and the heat recovery boiler is required. Consequently, structure for the gas turbine becomes large and complex. And to cool the gas turbine, the heat recovery boiler is required to be in operation. Therefore, operation control for the gas turbine gets complex. The heat recovery boiler requires warming up, and thus, starting time thereof is prolonged. The combustor is cooled by steam. As a result, plant efficiency of the gas turbine degrades because heat is taken away from the gas turbine.

In a cooling device employing an air cooling method, a part of the compressed air that is compressed by the compressor cools the combustor. Therefore, the amount of combustion air is reduced, and combustion temperature in the combustor rises. Consequently, the amount of NOx in the exhaust gas increases. In an ultra high temperature gas turbine, a casing temperature rises to a high temperature. Therefore, the cooling device employing the air cooling method, which has a low cooling capacity, cannot be applied thereto. In a cooling device employing a recovery type air cooling method, compressed air that is compressed by the compressor cools the combustor. After the compressed air cools the combustor, the compressed air is provided to the combustor. Consequently, combustion air is sufficiently secured, and emission level of NOx can be reduced. The compressed air is, however, recovered after the compressed air is cooled by the wall of the combustor. As a result, the pressure loss generated at the combustor is large, and thus, turbine efficiency degrades. A flow sleeve provided on the outer periphery side of the inner liner of the combustor is required. Therefore, the gas turbine requires a lot of structural members, and structure of the turbine becomes complex.

The present invention is directed toward solving the problems. An object of the present invention is to provide a gas turbine that can prevent degradation of power efficiency by configuring the combustor so that the combustor can be cooled by preventing the pressure loss of the compressed air.

### MEANS FOR SOLVING PROBLEM

To achieve the above object, according to the invention of claim 1, a gas turbine, in which compressed air that is compressed by a compressor is mixed with fuel in a combustor, the mixture is burned to produce combustion gas, and the combustion gas is provided to a turbine to produce rotative power, includes: a pressurizing unit that pressurizes some of the compressed air that is compressed by the compressor; a combustor cooling unit that cools the combustor with the compressed air that is pressurized by the pressurizing unit; and a first air-supplying unit that supplies the compressed air that is used to cool the combustor to the combustor.

According to the invention of claim 2, the gas turbine further includes a water adding unit that adds water to the compressed air that is pressurized by the pressurizing unit. The combustor cooling unit cools the combustor with the compressed air to which water is added by the water adding unit.

According to the invention of claim 3 the gas turbine further includes a compressed air cooling unit that cools the compressed air that is pressurized by the pressurizing unit. The combustor cooling unit cools the combustor with the compressed air that is cooled by the compressed air cooling unit.

According to the invention of claim 4, in the gas turbine, the compressed air cooling unit cools the compressed air that is pressurized by the pressurizing unit with the compressed air that is compressed by the compressor.

According to the invention of claim 5, in the gas turbine, the compressed air cooling unit cools the compressed air that is pressurized by the pressurizing unit with the fuel to be provided to the combustor.

According to the invention of claim 6, the gas turbine further includes an exhaust heat recovering unit that sends exhaust gas discharged by the turbine to a boiler to generate steam, sends the generated steam to a steam turbine to generate power, and returns cooled feedwater to the boiler to overheat the feedwater. The compressed air cooling unit cools the compressed air that is pressurized by the pressurizing unit with the feedwater to be cooled and returned to the boiler.

According to the invention of claim 7, the gas turbine further includes an exhaust heat recovering unit that sends exhaust gas discharged by the turbine to a boiler to generate steam, sends the generated steam to a steam turbine to generate power, and returns cooled feedwater to the boiler to overheat the feedwater. The compressed air cooling unit cools the compressed air that is pressurized by the pressurizing unit with the feedwater generated in the boiler.

According to the invention of claim 8, in the gas turbine, the pressurizing unit extracts from a casing some of the compressed air that is compressed by the compressor and pressurizes the compressed air, and the first air-supplying unit returns the compressed air that is used to cool the combustor to the casing.

According to the invention of claim 9, in the gas turbine, the combustor cooling unit includes a plurality of cooling passages formed within a wall portion of an inner liner included in the combustor.

According to the invention of claim 10, the gas turbine further includes a turbine cooling unit that cools the turbine with the compressed air that is pressurized by the pressurizing unit and a second air-supplying unit that provides the compressed air that is used to cool the turbine to the combustor.

### EFFECT OF THE INVENTION

According to the invention of claim 1, a gas turbine includes: a pressurizing unit that pressurizes some of the compressed air that is compressed by the compressor; a combustor cooling unit that cools the combustor with the compressed air that is pressurized by the pressurizing unit; and a first air-supplying unit that supplies the compressed air that is used to cool the combustor to the combustor. Thus, compressed air that is compressed by a compressor is provided to a combustor, and a part of the compressed air is pressurized by a pressurizing unit. Then, the compressed air that is pressurized by the pressurizing unit is sent to a combustor cooling unit, and the compressed air cools the combustor. After cooling the combustor, the compressed air is provided to the combustor by a first air-supplying unit. In the combustor, the compressed air is mixed with fuel, and the mixture is burned to produce combustion gas. The combustion gas is provided to the turbine to produce rotative power. Because a part of the compressed air is pressurized and the compressed air cools the combustor, a pressure loss of the compressed air can be minimized and the combustor can be appropriately cooled. And because the air that is used to cool the combustor and the compressed air that is compressed by the compressor are both provided to the combustor, the total amount of the combustion air is not reduced and increase of emission level of NOx due to increase of a combustion temperature can be prevented. Consequently, degradation of the power efficiency can be prevented.

According to the invention of claim 2, the gas turbine further includes a water adding unit that adds water to the compressed air that is pressurized by the pressurizing unit. Thus, a water adding unit adds water to a compressed air. Consequently, the temperature of the compressed air can be lowered, the combustor can be efficiently cooled, and the combustion temperature can be lowered, thereby reducing emission level of NOx.

According to the invention of claim 3 the gas turbine further includes a compressed air cooling unit that cools the compressed air that is pressurized by the pressurizing unit. The combustor cooling unit cools the combustor with the compressed air that is cooled by the compressed air cooling unit. Thus, a compressed air cooling unit is used to cool compressed air so that the temperature of the compressed air is lowered. Thus, a combustor can be efficiently cooled, and the combustion temperature can be lowered, thereby reducing emission level of NOx.

According to the invention of claim 4, in the gas turbine, the compressed air cooling unit cools the compressed air that is pressurized by the pressurizing unit with the compressed air that is compressed by the compressor. Thus, compressed air that is compressed by a compressor is used as a cooling medium that cools the compressed air. Thus, the compressed air that is pressurized can be appropriately cooled by using a simple configuration.

According to the invention of claim 5, in the gas turbine, the compressed air cooling unit cools the compressed air that is pressurized by the pressurizing unit with the fuel to be provided to the combustor. Thus, fuel is used as cooling medium that cools compressed air. Thus, the compressed air that is pressurized can be appropriately cooled by using a simple configuration, and the heating of fuel can improve combustion efficiency.

According to the invention of claim 6, the gas turbine further includes an exhaust heat recovering unit that sends exhaust gas discharged by the turbine to a boiler to generate steam, sends the generated steam to a steam turbine to generate power, and returns cooled feedwater to the boiler to overheat the feedwater. The compressed air cooling unit cools the compressed air that is pressurized by the pressurizing unit with the feedwater to be cooled and returned to the boiler. Thus, feedwater in an exhaust heat recovering unit is used as cooling medium that cools compressed air. Thus, the compressed air that is pressurized can be efficiently cooled.

According to the invention of claim 7, the gas turbine further includes an exhaust heat recovering unit that sends exhaust gas discharged by the turbine to a boiler to generate steam, sends the generated steam to a steam turbine to generate power, and returns cooled feedwater to the boiler to overheat the feedwater. The compressed air cooling unit cools the compressed air that is pressurized by the pressurizing unit with the feedwater generated in the boiler. Thus, steam in an exhaust heat recovering unit is used as cooling medium that cools compressed air. Thus, the compressed air that is pressurized can be efficiently cooled.

According to the invention of claim 8, in the gas turbine, the pressurizing unit extracts from a casing some of the compressed air that is compressed by the compressor and pressurizes the compressed air, and the first air-supplying unit returns the compressed air that is used to cool the combustor to the casing. Thus, air that is used to cool a combustor is returned to a casing. Thus, the total amount of the compressed air that is compressed by a compressor is provided to the combustor, so that the loss of combustion air is prevented, and increase of emission level of NOx due to increase of a combustion temperature can be prevented.

According to the invention of claim 9, in the gas turbine, the combustor cooling unit includes a plurality of cooling passages formed within a wall portion of an inner liner included in the combustor. Thus, compressed air passes through a plurality of cooling passages provided within the wall portion of an inner liner and thus, a combustor is cooled. Consequently, a combustor is efficiently cooled.

According to the invention of claim 10, the gas turbine includes a turbine cooling unit that cools the turbine with compressed air that is pressurized by a pressurizing unit, and a second air-supplying unit that provides the compressed air that has cooled the turbine to a combustor. Thus, the compressed air that is compressed by a compressor is provided to the combustor, and a part of the compressed air is pressurized by the pressurizing unit. The compressed air that is pressurized by the pressurizing unit is sent to a combustor cooling unit and a turbine cooling unit, and the compressed air cools the combustor and the turbine. After the compressed air cools the combustor and the turbine, the compressed air is provided to the combustor by a first air-supplying unit and the second air-supplying unit. In the combustor, the compressed air is mixed with fuel, and the mixture is burned to produce combustion gas. The combustion gas is provided to the turbine to obtain rotative power. Consequently, a pressure loss of the compressed air can be minimized and the combustor and the turbine can be appropriately cooled. Moreover, the reduction of combustion air is prevented because the total amount of air that is cooled is provided to the combustor, thereby preventing increase in emission level of NOx due to increase of a combustion temperature. As a result, degradation of power efficiency thereof can be prevented.

### BRIEF DESCRIPTION OF DRAWINGS

[Fig. 1] Fig. 1 is a schematic of a gas turbine according to a first embodiment of the present invention.
[Fig. 2] Fig. 2 is a schematic of a configuration of the gas turbine according to the first embodiment.
[Fig. 3] Fig. 3 is a schematic of a configuration of a combustor in the gas turbine according to the first embodiment.
[Fig. 4A] Fig. 4A is a schematic of a combustor cooling device in a gas turbine according to a second embodiment of the present invention.
[Fig. 4B] Fig. 4B is a schematic of a variation of the combustor cooling device in the gas turbine according to the second embodiment.
[Fig. 4C] Fig. 4C is a schematic of a variation of the combustor cooling device in the gas turbine according to the second embodiment.
[Fig. 4D] Fig. 4D is a schematic of a variation of the combustor cooling device in the gas turbine according to the second embodiment.
[Fig. 5] Fig. 5 is a schematic of a gas turbine according to a third embodiment of the present invention.
[Fig. 6] Fig. 6 is a schematic of a gas turbine according to a fourth embodiment of the present invention.
[Fig. 7] Fig. 7 is a schematic of a gas turbine according to a fifth embodiment of the present invention.
[Fig. 8] Fig. 8 is a schematic of a gas turbine according to a sixth embodiment of the present invention.
[Fig. 9] Fig. 9 is a schematic of a gas turbine according to a seventh embodiment of the present invention.
[Fig. 10] Fig. 10 is a schematic of a gas turbine according to an eighth embodiment of the present invention.

### EXPLANATIONS OF LETTERS OR NUMERALS

- 11: compressor
- 12: combustor
- 13: turbine
- 14: generator
- 41: pressurizing device (pressurizing unit)
- 42,: 51, 61, 62, 63 combustor cooling device (combustor cooling unit)
- 43: compressed air supply line
- 44: compressed air branching line
- 45: cooling air supply line, first cooling air supply line
- 46: compressed air circulation line, first compressed air circulation line (first air-supplying unit)
- 47: fuel supply line
- 48: exhaust line
- 53: cooling passage
- 71: water supply line
- 72: water injection device (water adding unit)
- 81,: 82, 83, 86 heat exchanger (compressed air cooling unit)
- 84: exhaust heat recovery boiler (exhaust heat recovering unit)
- 85: feedwater line
- 87: steam supply line
- 91: second cooling air supply line
- 92: turbine cooling device (turbine cooling unit)
- 93: second compressed air circulation line (second air- supplying unit)

### BEST MODE(S) FOR CARRYING OUT THE INVENTION

Exemplary embodiments of a gas turbine according to the present invention are described below in greater detail with reference to the accompanying drawings. The present invention is, however, not limited thereto.

### First Embodiment

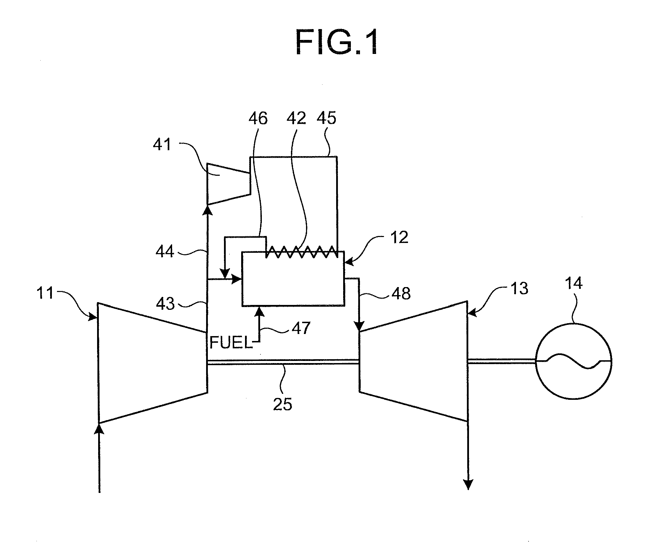

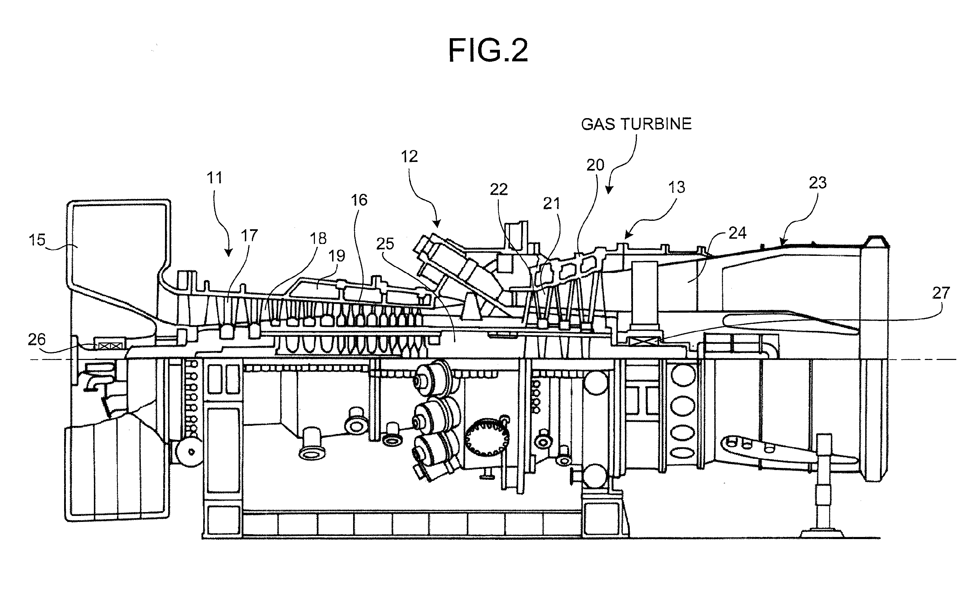

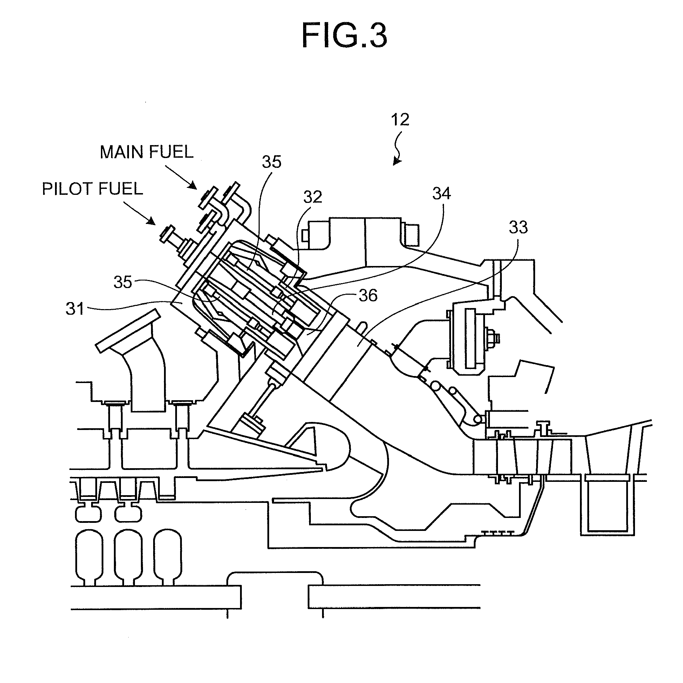

Fig. 1 is a schematic of a gas turbine according to a first embodiment of the present invention, Fig. 2 is a schematic of a configuration of the gas turbine according to the first embodiment, and Fig. 3 is a schematic of a combustor in the gas turbine according to the first embodiment.

As shown in Figs. 1 and 2, the gas turbine according to the present embodiment includes a compressor 11, a combustor 12, and a turbine 13. A generator 14 is connected to the turbine 13. The compressor 11 has an air inlet 15 through which air is taken in, and a compressor casing 16. In the compressor casing 16, a plurality of stator vanes 17 and rotor vanes 18 are arranged alternately. An extraction manifold 19 is provided on the outside of the compressor casing 16. The compressed air, which has been compressed by the compressor 11, is passed in the combustor 12, where fuel is mixed with the compressor 11 and the mixture is ignited by using a burner so that the compressed air is burned. The turbine 13 is configured so that a plurality of stator vanes 21 and rotor vanes 22 are arranged so as to alternate in a turbine casing 20.

An exhaust chamber 23 is continuously provided to the turbine casing 20 of the turbine 13. The exhaust chamber 23 has an exhaust diffuser 24 to which the turbine 13 is continuously provided. A rotor (i.e. a turbine shaft) 25 is disposed so as to go through the central portion of each of the compressor 11, the combustor 12, the turbine 13, and the exhaust chamber 23. One end of a rotor 25 on the compressor 11 side is rotatably supported by a bearing 26, whereas the other end of the rotor 25 on the exhaust chamber 23 side is rotatably supported by an exhaust-side bearing 27. A plurality of disc plates are fixed onto the rotor 25, and also the rotor vanes 18 and 22 are connected to the rotor 25. In addition, a drive shaft for the generator 14 is connected to the end on the exhaust chamber 23 side.

Air is taken into the gas turbine through the air inlet 15, and the air is compressed while it passes through the stator vanes 17 and the rotor vanes 18. The compressed air is at high temperature and high pressure. Fuel is mixed with the compressed air in the combustor 12 and the mixture is burned. As the mixture burns, combustion gas at high temperature and high pressure is generated in the in the combustor 12. As the combustion gas passes through the stator vanes 21 and the rotor vanes 22, the rotor 25 is driven with the force of the combustion gas. The rotor 25 generates power by providing the generator 14 rotative power. The combustion gas, after driving the rotor 25, enters into the exhaust diffuser 24 included in the exhaust chamber 23. The exhaust diffuser 24 converts the combustion gas into an exhaust gas having a static pressure, and releases the exhaust gas into the atmosphere.

In the combustor 12, as shown in Fig. 3, a combustor casing is configured so that a combustor inner liner 32 is supported by a combustor outer cylinder 31 and a combustor transition piece 33 is connected to the tip end portion of the combustor inner liner 32. Within the combustor inner liner 32, a pilot nozzle 34 is arranged along the center of the combustor inner liner 32, a plurality of premixing nozzles 35 is arranged on the inner circumference of the combustor inner liner 32 so that the premixing nozzles 35 surround the pilot nozzle 34 along the circumferential direction thereof, and a pilot corn 36 is attached to the tip end portion of the pilot nozzle 34.

Thus, when compressed air at high temperature and high pressure flows from the compressor casing 16 of the compressor 11 to the combustor 12, the compressed air is mixed with fuel ejected from a main fuel rod to produce swirl flow of the mixture in the premixing nozzles 35, and the swirl flow flows into the interior of the combustor inner liner 32. On the other hand, in the interior of the pilot nozzle 34, compressed air is mixed with fuel ejected from a pilot fuel rod. The mixture is ignited by a pilot flame (not shown) and is burned to produce combustion gas. The combustion gas is ejected to the interior of the combustor inner liner 32. Some of the combustion gas is ejected into the interior of the combustor inner liner 32 so as to be diffused peripherally accompanying flame. Consequently, the combustion gas is ignited by the premixed gas that flows to the combustor inner liner 32 and the combustor transition piece 33, and is burned.

The gas turbine according to the present embodiment that is configured as described above includes, as shown in Fig. 1, a pressurizing device 41, such as a compressor and a blower, that extracts from the casing some of the compressed air that is compressed by the compressor 11 and pressurizes the compressed air, and a combustor cooling device 42 that cools the combustor 12 by using the compressed air that is pressurized by the pressurizing device 41. After the compressed air cools the combustor 12, the compressed air is provided to the combustor 12.

A compressed air supply line 43 that connects the compressor 11 and the combustor 12 branches from some midpoint to form a compressed air branching line 44. The compressed air branching line 44 is connected to the pressurizing device 41. The combustor cooling device 42 is, for example, a plurality of cooling passages that are formed within the wall portion of the inner liner that is included in the combustor 12. The combustor cooling device 42 and a cooling air supply line 45 are connected to the pressurizing device 41. And the compressed air supply line 43 and a compressed air circulation line 46 (i.e. the first air-supplying unit) are connected to the combustor cooling device 42. After the compressed air cools the combustor 12, the compressed air is provided to the combustor 12 via the compressed air supply line 43. More specifically, after the compressed air cools the combustor 12, the compressed air is returned to the compressed air supply line 43. Thus, the compressed air is provided to the casing of the combustor 12.

A fuel supply line 47 that supplies fuel to the combustor 12 is connected to the combustor 12. The turbine 13 and a combustion gas exhaust line 48 are connected to the combustor 12.

In the compressor 11, air is taken thereinto and passes through a plurality of stator vanes 17 and rotor vanes 18. Thus, the air is compressed to produce compressed air that is at high temperature and high pressure. The compressed air flows into the compressed air supply line 43. Some of the compressed air that flows through the compressed air supply line 43, that is the compressed air that is extracted from the casing, branches into the compressed air branching line 44 and provided to the pressurizing device 41, which further pressurizes the compressed air. The compressed air that is pressurized by the pressurizing device 41 is provided to the combustor cooling device 42 via the cooling air supply line 45. The compressed air cools the combustor 12, for example, by passing through the wall portion of the inner liner included in the combustor 12. After cooling the combustor 12, the compressed air is returned to the compressed air supply line 43 via the compressed air circulation line 46. Thus, the total amount of the compressed air that is compressed by the compressor 11 is provided to the combustor 12 via the compressed air supply line 43.

In the combustor 12, the compressed air provided by the compressed air supply line 43 is mixed with a predetermined fuel supplied by the fuel supply line 47, and the mixture is burned to produce combustion gas that is at high temperature and high pressure. Then, the combustion gas is sent to the turbine 13 via the combustion gas exhaust line 48, where the combustion gas passes through a plurality of stator vanes 21 and rotor vanes 22 to drive and rotate a rotor 25, which in turn drives the generator 14 connected thereto to generate power.

Thus, the gas turbine according to the first embodiment is configured so that the compressed air compressed by the compressor 11 is mixed with fuel in the combustor 12 and the mixture is burned to produce combustion gas, which is provided to the turbine 13, thereby producing rotative power. The gas turbine includes the pressurizing device 41 that pressurizes some of the compressed air, the combustor cooling device 42 that cools the combustor 12 by using the compressed air pressurized by the pressurizing device 41, and the compressed air circulation line 46 that provides the compressed air to the casing of the combustor 12 after the compressed air cools the combustor 12.

Thus, the compressed air compressed by the compressor 11 is provided to the combustor 12, and some of the compressed air is pressurized by the pressurizing device 41 and is provided to combustor cooling device 42. The compressed air provided to the combustor cooling device 42 cools the combustor 12. The compressed air after cooling the combustor 12 is provided to the combustor 12 by the compressed air circulation line 46. In the combustor 12, the compressed air provided to the combustor 12 after cooling the combustor 12 is mixed with fuel, and the mixture is burned to produce combustion gas. The combustion gas is provided to the turbine 13 to produce rotative power. Some of the compressed air compressed by the compressor 11 is pressurized, and then, cools the combustor 12. Consequently, the compressed air that cools the combustor 12 alone becomes pressure loss, and pressure loss of the compressed air can be minimized, and the combustor 12 can be appropriately cooled. Because the air that is used to cool the combustor 12 is returned to the compressed air supply line 43, the total amount of the compressed air compressed by the compressor 11 is provided to the combustor 12. Therefore, the amount of combustion air is not reduced, and increase in emission level of NOx due to increase of the combustion temperature can be prevented. As a result, degradation of power efficiency of the turbine can be prevented.

In the gas turbine according to the present embodiment, the pressurizing device 41 extracts some of the compressed air compressed by the compressor 11 from the casing and the compressed air is pressurized, whereas the compressed air that is used to cool the combustor 12 is returned to the casing of the compressor 11 via the compressed air circulation line 46. Therefore, the total amount of the compressed air compressed by the compressor 11 is returned to the casing. As a result, the compressed air compressed by the compressor 11 can be efficiently provided to the combustor 12, the amount of the combustion air is not reduced, and increase in emission level of NOx due to increase of the combustion temperature can be prevented.

### Second Embodiment

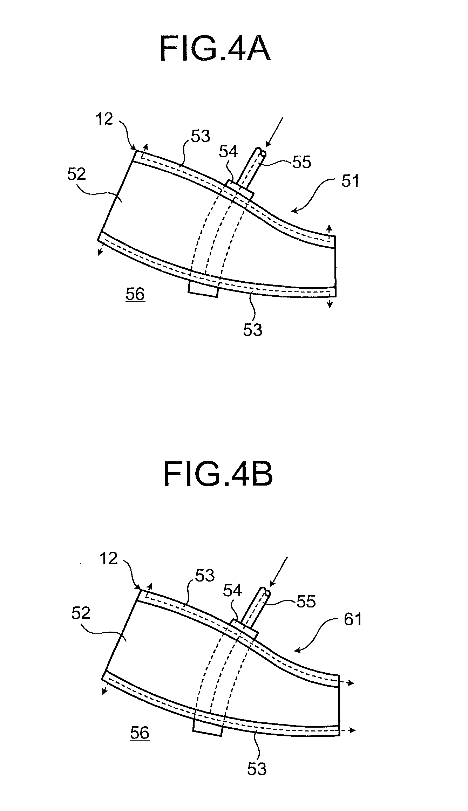

Fig. 4A is a schematic of a combustor cooling device of a gas turbine according to a second embodiment of the present invention, Figs. 4B to 4D are schematics of variations of the combustor cooling device of the gas turbine according to the second embodiment. The same reference symbol is used for the elements having the same function described in the previous embodiment, and duplicated description is avoided.

In a gas turbine according to the second embodiment, as shown in Fig. 4A, a combustor cooling device 51 is a plurality of cooling passages formed within the wall portion of an inner liner 52 included in the combustor 12. More specifically, in the combustor cooling device 51, the cooling passages 53 are formed within the wall of the inner liner 52 along the longitudinal direction thereof (i.e. the direction in which the combustion gas flows). A header 54 having a ring shape is attached to an intermediate portion on the outer circumference of the inner liner 52 in the longitudinal direction thereof. A cooling air supply pipe 55 as a cooling air supply line is connected to the header 54. Each of the cooling passages 53 is connected to the cooling air supply pipe 55 via the interior of the header 54 so as to allow communication therebetween, and the both ends of each of the cooling passages 53 open into a casing 56.

Thus, when some of the compressed air compressed by the compressor is provided to the header 54 via the cooling air supply pipe 55, the compressed air provided to the header 54 passes through the cooling passages 53 of the combustor cooling device 51, thereby cooling the combustor 12. The compressed air that is used to cool the combustor 12 is discharged into the casing 56, and thus, is recovered. Therefore, the total amount of the compressed air compressed by the compressor can be provided to the combustor 12 via the casing 56.

In a variation of the gas turbine according to the second embodiment, as shown in Fig. 4B, a cooling device 61 is a plurality of cooling passages formed within the wall portion of the inner liner 52 included in the combustor 12. The cooling passages 53 are formed within the wall portion of the inner liner 52, and the header 54 having a ring shape is attached to the outer circumference of the inner liner 52. The cooling air supply pipe 55 is connected to the header 54. The cooling passages 53 are connected to the cooling air supply pipe 55 via the interior of the header 54 so as to allow communication therebetween. An end of each of the cooling air supply pipe 55 opens into the casing 56, and the other end opens into the interior of the inner liner 52.

Thus, when some of the compressed air compressed by the compressor is provided to the header 54 via the cooling air supply pipe 55, the compressed air provided to the header 54 passes through the cooling passages 53, thereby cooling the combustor 12. The compressed air that is used to cool the combustor 12 is discharged into the casing 56, is recovered, and merges into the combustion gas in the interior of the inner liner 52. Therefore, the compressed air compressed by the compressor can be provided to the combustor 12 via the casing 56, and the compressed air can be provided to downstream side of the inner liner 52, thereby cooling the transition piece and the first stator vane.

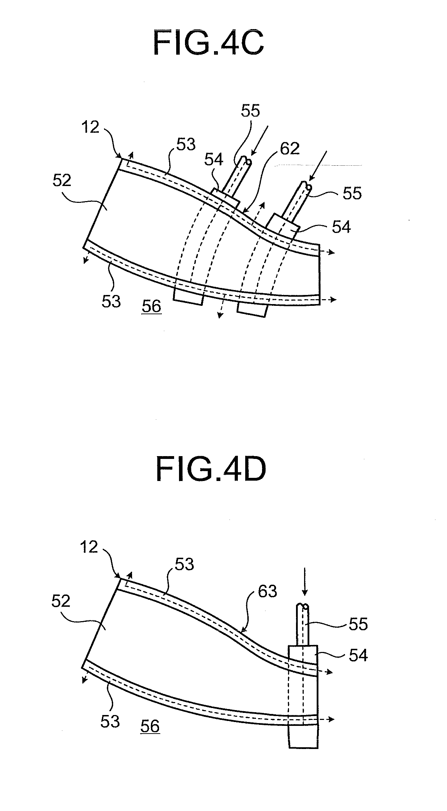

In another variation of the gas turbine according to the second embodiment, as shown in Fig. 4C, a combustor cooling device 62 is a plurality of cooling passages formed within the wall portion of the inner liner 52 included in the combustor 12. The cooling passages 53 are formed within the wall portion of the inner liner 52, and headers 54 each having a ring shape are attached to two locations on the outer circumference of the inner liner 52. Each of the cooling air supply pipes 55 is connected to each of the headers 54. Each of the cooling passages 53 is connected to the cooling air supply pipes 55 via the interior of the headers 54 so as to allow communication therebetween, and the both ends and an intermediate portion thereof open into the casing 56.

Thus, when some of the compressed air compressed by the compressor is provided to the headers 54 via the cooling air supply pipes 55, the compressed air provided to the headers 54 passes through the cooling passages 53 of the combustor cooling device 62, thereby cooling the combustor 12. The compressed air that is used to cool the combustor 12 is discharged into the casing 56, is recovered, and merges into the combustion gas in the interior of the inner liner 52. Therefore, the compressed air compressed by the compressor can be provided to combustor 12 via the casing 56, and the compressed air can be provided to downstream side of the interior of the inner liner 52, thereby cooling the transition piece and the first stator vane.

In still another variation of the gas turbine according to the second embodiment, as shown in Fig. 4D, a combustor cooling device 63 is a plurality of cooling passages formed within the wall portion of the inner liner 52 included in the combustor 12. The cooling passages 53 are formed within the wall portion of the inner liner 52, and the header 54 having a ring shape is attached to the edge of the outer circumference of the inner liner on the downstream side of the combustion gas flow. The cooling air supply pipe 55 is connected to the header 54. The cooling passages 53 are connected to the cooling air supply pipe 55 via the interior of the header 54 so as to allow communication therebetween, and the edge of each of the cooling passages 53 on the upstream side of the combustion gas flow opens into the casing 56.

Thus, when some of the compressed air compressed by the compressor is provided to the header 54 via the cooling air supply pipe 55, the compressed air provided to the header 54 passes through the cooling passages 53 of the combustor cooling device 62, thereby cooling the combustor 12. The compressed air that is used to cool the combustor 12 is discharged into the casing 56, and then recovered. Therefore, the compressed air performs cooling so as to flow from the downstream side to the upstream side of the combustion gas flow, thereby efficiently cooling a heated part of the combustor 12.

Thus, the gas turbine according to the second embodiment includes the combustor cooling devices 51, 61, 62, and 63 that cool the combustor 12 with the compressed air that is obtained by pressurizing some of the compressed air compressed by the compressor and the cooling passages 53, as the combustor cooling devices 51, 61, 62, and 63, formed within the wall portion of the inner liner 52 included in the combustor 12.

Thus, when some of the compressed air compressed by the compressor is provided to the header(s) 54 via the cooling air supply pipe(s) 55, the compressed air provided to the header(s) 54 passes through the cooling passages 53, thereby cooling the combustor 12. As a result, the combustor 12 can be efficiently cooled by using a simple structure.

### Third Embodiment

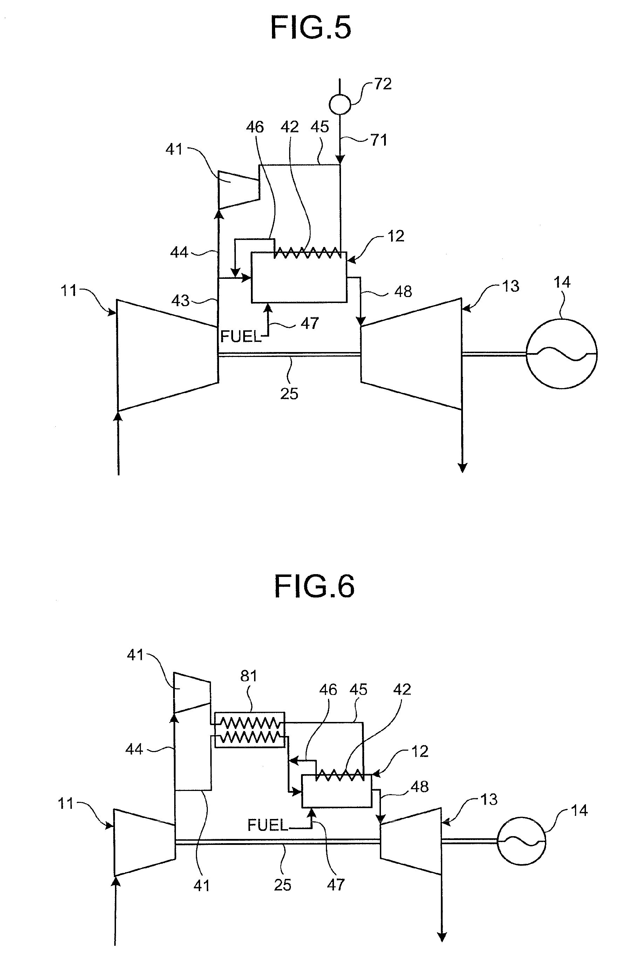

Fig. 5 is a schematic of a gas turbine according to a third embodiment of the present invention. The same reference symbol is used for the elements having the same function described in the previous embodiments, and duplicated description is avoided.

In the gas turbine according to the third embodiment, as shown in Fig. 5, the compressor 11 is connected to the combustor 12 via the compressed air supply line 43, as well as connected to the pressurizing device 41 via the compressed air branching line 44 that branches from some midpoint of the compressed air supply line 43. The pressurizing device 41 is connected to the combustor cooling device 42 via the cooling air supply line 45. A water supply line 71 is connected to the cooling air supply line 45. A water injection device (water adding unit) 72 is attached to the cooling air supply line 45. The combustor cooling device 42 is connected to the compressed air supply line 43 via the compressed air circulation line 46. The fuel supply line 47 is connected to the combustor 12, and the combustor 12 is connected to the turbine 13 via the combustion gas exhaust line 48.

Thus, the compressor 11 compresses air to produce compressed air that is at high temperature and high pressure. The compressed air flows into the compressed air supply line 43. Some of the compressed air flowing through the compressed air supply line 43 branches into the compressed air branching line 44 and is provided to the pressurizing device 41. The compressed air is further pressurized by the pressurizing device 41, and then, flows into the cooling air supply line 45. On the other hand, the water injection device 72 injects a predetermined amount of water to the water supply line 71, and water is added from the water supply line 71 to the compressed air flowing through the cooling air supply line 45, thereby cooling the compressed air. The compressed air of which a temperature is lowered thus is provided to the combustor cooling device 42, thereby cooling the combustor 12. The compressed air that is used to cool the combustor 12 is returned to the compressed air supply line 43 via the compressed air circulation line 46. Consequently, the total amount of the compressed air compressed by the compressor 11 is provided to the combustor 12 via the compressed air supply line 43.

Thus, in the combustor 12, the compressed air provided from the compressed air supply line 43 is mixed with the fuel provided from the fuel supply line 47, and the mixture is burn to produce combustion gas that is at high temperature and high pressure. The combustion gas produced in the combustor 12 is sent to the turbine 13 via the combustion gas exhaust line 48. Then, the combustion gas passes through the stator vanes 21 and the rotor vanes 22, thereby rotationally driving the rotor 25, which in turn drives the generator 14 connected to the rotor 25 to generate power.

Thus, the gas turbine according to the third embodiment includes the pressurizing device 41 that pressurizes some of the compressed air compressed by the compressor 11, the combustor cooling device 42 that cools the combustor 12 with the compressed air pressurized by the pressurizing device 41, the compressed air circulation line 46 that provides to the casing of the combustor 12 the compressed air that is used to cool the combustor 12, and the water supply line 71 having the water injection device 72 that adds water to the compressed air pressurized by the pressurizing device 41.

Thus, the compressed air compressed by the compressor 11 is provided to the combustor 12, and some of the compressed air is pressurized by the pressurizing device 41, cooled by the water injection device 72, sent to the combustor cooling device 42, and then, the compressed air sent to the combustor cooling device 42 cools the combustor 12. The compressed air that is used to cool the combustor 12 is provided to the combustor 12 via the compressed air circulation line 46. In the combustor 12, the combustion gas is mixed with fuel, and the mixture is burned to produce combustion gas. The combustion gas is provided to the turbine 13 to produce rotative power. Here, after some of the compressed air compressed by the compressor 11 is pressurized and cooled, the compressed air is used to cool the combustor 12. Therefore, the compressed air that is pressurized and cooled alone becomes pressure loss. Therefore, pressure loss of the compressed air can be minimized, and the combustor 12 can be appropriately cooled. The compressed air that is used to cool the combustor 12 is returned to the compressed air supply line 43. Consequently, the total amount of the compressed air compressed by the compressor 11 is provided to the combustor 12, and the amount of the combustion air is not reduced. Thus, increase in emission level of NOx due to increase of the combustion temperature can be prevented. The compressed air is pressurized and cooled, and then, is provided to the combustor cooling device 42. Therefore, a temperature of the compressed air can be lower. As a result, the combustor 12 can be efficiently cooled, and the compressed air that is at low temperature is provided to the interior of the combustor 12. Consequently, the combustion temperature can be lowered and emission level of NOx can be reduced.

### Fourth Embodiment

Fig. 6 is a schematic of a gas turbine according to a fourth embodiment of the present invention. The same reference symbol is used for the elements having the same function described in the previous embodiments, and duplicated description is avoided.

In the gas turbine according to the fourth embodiment, as shown in Fig. 6, the compressor 11 is connected to the combustor 12 via the compressed air supply line 43, and also is connected to the pressurizing device 41 via the compressed air branching line 44 that branches from some midpoint of the compressed air supply line 43. The pressurizing device 41 is connected to the combustor cooling device 42 via the cooling air supply line 45. A heat exchanger (compressed air cooling unit) 81 that cools the compressed air pressurized by the pressurizing device 41 is provided to the cooling air supply line 45. The combustor cooling device 42 cools the combustor with the compressed air cooled by the heat exchanger 81. The compressed air flowing through the cooling air supply line 45 and the compressed air flowing through the compressed air supply line 43 are introduced into the exchanger 81, where heat exchange is performed between the compressed airs. More specifically, the compressed air that flows through the cooling air supply line 45 after being compressed by the compressor 11 and being pressurized by the pressurizing device 41 is at higher temperature and higher pressure than the compressed air that flows through the compressed air supply line 43 after being compressed by the compressor 11, and thus, when the compressed air that is pressurized by the pressurizing device 41 passes through the exchanger 81, the compressed air that is pressurized by the pressurizing device 41 is cooled by the compressed air that is compressed by the compressor 11. The combustor cooling device 42 is connected to the compressed air supply line 43 via the compressed air circulation line 46. The fuel supply line 47 is connected to the combustor 12, and the combustor 12 is connected to the turbine 13 via the combustion gas exhaust line 48.

Thus, the compressor 11 compresses air to produce compressed air that is at high temperature and high pressure, and the compressed air flows through the compressed air supply line 43. Some of the compressed air that flows through the compressed air supply line 43 branches into the compressed air branching line 44, and is provided to pressurizing device 41, which further pressurizes the compressed air. The compressed air that is further pressurized thus flows through the cooling air supply line 45. Thus, the compressed air that is compressed by the compressor 11 is introduced into the heat exchanger 81 via the compressed air supply line 43, and the compressed air that is pressurized by the pressurizing device 41 is also introduced into the heat exchanger 81 via the cooling air supply line 45. In the heat exchanger 81, heat exchange is performed therebetween. The compressed air that is pressurized by the pressurizing device 41 is cooled by the exchanger 81, and then, is provided to the combustor cooling device 42, thereby cooling the combustor 12. The compressed air that is used to cool the combustor 12 is returned to the compressed air supply line 43 via the compressed air circulation line 46. Consequently, the total amount of the compressed air compressed by the compressor 11 is provided to the combustor 12 via the compressed air supply line 43.

Then, in the combustor 12, the compressed air provided by the compressed air supply line 43 is mixed with predetermined fuel provided by the fuel supply line 47, and the mixture is burned to produce combustion gas that is at high temperature and high pressure. The combustion gas produced in the combustor 12 is sent to the turbine via the combustion gas exhaust line 48. The combustion gas passes through the stator vanes 21 and the rotor vanes 22, thereby rotationally driving the rotor 25, which in turn drives the generator 14 connected to the rotor 25 to generate power.

Thus, the gas turbine according to the fourth embodiment includes the pressurizing device 41 that pressurizes some of the compressed air compressed by the compressor 11, the combustor cooling device 42 that cools the combustor 12 with the compressed air that is pressurized by the pressurizing device 41, the compressed air circulation line 46 that provides the compressed air that is used to cool the combustor 12 to the casing of the combustor 12, and the exchanger 81 that cools the compressed air that is pressurized by the pressurizing device 41 with the compressed air that is compressed by the compressor 11.

Thus, the compressed air that is compressed by the compressor 11 is provided to the combustor 12, and some of the compressed air that is compressed by the compressor 11 is pressurized by the pressurizing device 41, cooled by the heat exchanger 81, and sent to the combustor cooling device 42. The compressed air sent to the combustor cooling device 42 cools the combustor 12, and the compressed air that is used to cool the combustor 12 is provided to the combustor 12 via the compressed air circulation line 46. In the combustor 12, the compressed air is mixed with fuel, and the mixture is burned to produce combustion gas. The combustion gas is provided to the turbine 13 to produce rotative power. Here, some of the compressed air that is compressed by the compressor 11 is pressurized and cooled to cool the combustor 12. Therefore, the compressed air that is used to cool the combustor 12 after being pressurized and cooled alone becomes pressure loss. Thus, pressure loss of the compressed air can be minimized, and the combustor 12 can be appropriately cooled. The compressed air that is used to cool the combustor 12 is returned to the compressed air supply line 43. Therefore, the total amount of the compressed air that is compressed by the compressor 11 is provided to the combustor 12. As a result, the amount of the combustion air is not reduced, and increase in emission level of NOx due to increase of the combustion temperature can be prevented. Because the compressed air is pressurized and cooled before the compressed air is provided to the combustor cooling device 42, a temperature of the compressed air can be lowered, and the compressed air that is at low temperature is provided to the combustor 12. Therefore, the combustion temperature can be lowered, and emission level of NOx can be reduced.

### Fifth Embodiment

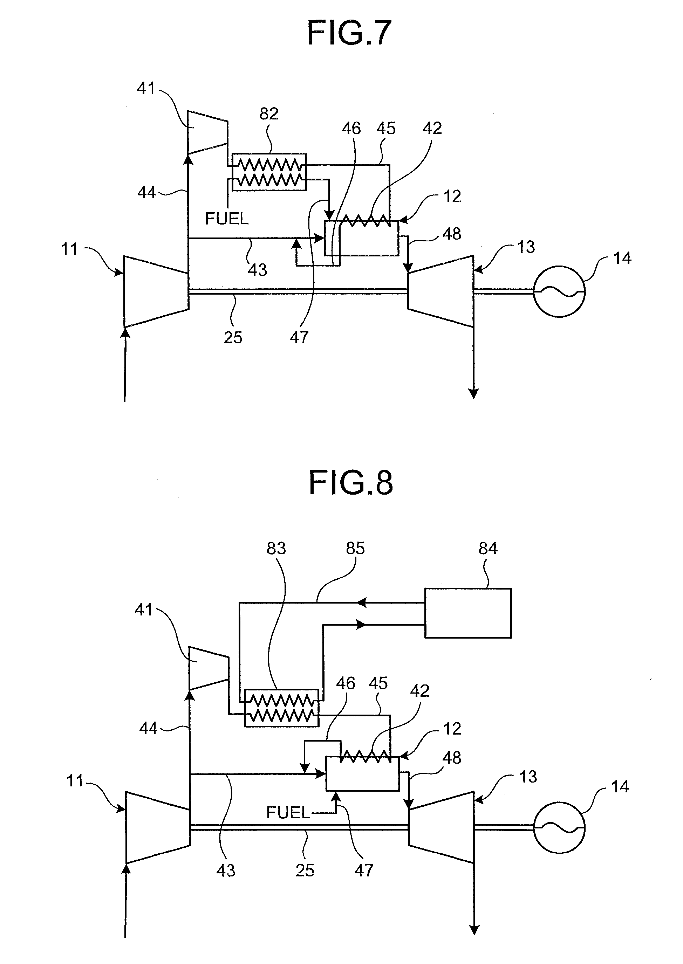

Fig. 7 is a schematic of a gas turbine according to a seventh embodiment of the present invention. The same reference symbol is used for the elements having the same function described in the previous embodiments, and duplicated description is avoided.

In the gas turbine according to the fifth embodiment, as shown in Fig. 7, the compressor 11 is connected to the combustor 12 via the compressed air supply line 43, and is also connected to the pressurizing device 41 via the compressed air branching line 44 that branches from some midpoint of the compressed air supply line 43. The pressurizing device 41 is connected to the combustor cooling device 42 via the cooling air supply line 45. A heat exchanger (compressed air cooling unit) 82 that cools the compressed air that is pressurized by the pressurizing device 41 is provided to the cooling air supply line 45. The combustor cooling device 42 cools the combustor 12 with the compressed air that is cooled by the heat exchanger 82. The compressed air that flows through the cooling air supply line 45 and the fuel that flows through the fuel supply line 47 are introduced into the exchanger 82, where heat exchange is performed therebetween. More specifically, the compressed air that flows through the cooling air supply line 45 after being compressed by the compressor 11 and being pressurized by the pressurizing device 41 is at higher temperature and higher pressure than the fuel that flows through the fuel supply line 47. Therefore, when the compressed air passes through the exchanger 82, the compressed air is cooled by the fuel. The combustor cooling device 42 is connected to the compressed air supply line 43 via the compressed air circulation line 46. The fuel supply line 47 is connected to the combustor 12, which in turn is connected to the turbine 13 via the combustion gas exhaust line 48.

Thus, the compressor 11 compresses air to produce compressed air that is at high temperature and high pressure, and the compressed air flows through the compressed air supply line 43. Some of the compressed air that flows the compressed air supply line 43 branches into the compressed air branching line 44, and is provided to the pressurizing device 41, where the compressed air is further pressurized. The compressed air that is further pressurized flows through the cooling air supply line 45. Then, the compressed air that is pressurized by the pressurizing device 41 is introduced into the heat exchanger 82 via the cooling air supply line 45, and the fuel is also introduced into the heat exchanger 82 via the fuel supply line 47. In the heat exchanger 82, heat exchange is performed between the compressed air and the fuel. The compressed air that is pressurized by the pressurizing device 41 is cooled by the exchanger 82 and then, provided to the combustor cooling device 42 to cool the combustor 12. On the other hand, the fuel is heated by the exchanger 82, and then, provided to the combustor 12. The compressed air that is used to cool the combustor 12 is returned to the compressed air supply line 43 via the compressed air circulation line 46. Therefore, the total amount of the compressed air that is compressed by the compressor 11 is provided to the combustor 12 via the compressed air supply line 43.

Then, in the combustor 12, the compressed air provided from the compressed air supply line 43 is mixed with heated predetermined fuel from the fuel supply line 47, and the mixture is burned to produce combustion gas that is at high temperature and high pressure. The combustion gas produced in the combustor 12 is sent to the turbine 13 via the combustion gas exhaust line 48. The combustion gas passes through the stator vanes 21 and the rotor vanes 22 to rotationally drive the rotor 25, which in turn drives the generator 14 that is connected to the rotor 25 to generate power.

Thus, the gas turbine according to the fifth embodiment includes the pressurizing device 41 that pressurizes some of the compressed air that is compressed by the compressor 11, the combustor cooling device 42 that cools the combustor 12 with the compressed air that is pressurized by the pressurizing device 41, the compressed air circulation line 46 that provides the compressed air that is used to cool the combustor 12 to the casing of the combustor 12, and the exchanger 82 that cools the compressed air that is pressurized by the pressurizing device 41 with the fuel that is provided to the combustor 12.

Thus, the compressed air that is compressed by the compressor 11 is provided to the combustor 12, and some of the compressed air is pressurized by the pressurizing device 41, cooled by the heat exchanger 82, and then sent to the combustor cooling device 42. The compressed air sent to the combustor cooling device 42 cools the combustor 12, and the compressed air that is used to cool the combustor 12 is provided to the combustor 12 via the compressed air circulation line 46. In the combustor 12, the compressed air that is provided to the combustor 12 is mixed with fuel, and the mixture is burned to produce combustion gas. The combustion gas is provided to the turbine 13 to produce rotative power. Here, some of the compressed air compressed by the compressor 11 is pressurized and cooled, and then, the compressed air cools the combustor 12. Because the compressed air that is used to cool the combustor 12 alone becomes pressure loss, pressure loss of the compressed air can be minimized, and the combustor 12 can be appropriately cooled. Because the air that is used to cool the combustor 12 is returned to the compressed air supply line 43, the total amount of the compressed air that is compressed by the compressor 11 is provided to the combustor 12. Thus, the amount of the combustion gas is not reduced, and increase in emission level of NOx due to increase of the combustion temperature can be prevented. Furthermore, because the compressed air is provided to the combustor cooling device 42 after being pressurized and cooled, a temperature of the compressed air can be lowered. Thus, the combustor 12 can be efficiently cooled and the compressed air that is at low temperature is provided to the interior of the combustor 12. Consequently, a temperature of the combustion gas can be lowered, and emission level of NOx can be reduced. The fuel is provided to the combustor 12 after being heated. Thus, particles of the fuel spray become smaller in size. As a result, the combustion efficiency is improved. Consequently, emission level of harmful substances can be reduced and a turbine output can be improved.

### Sixth Embodiment

Fig. 8 is a schematic of a gas turbine according to a sixth embodiment of the present invention. The same reference symbol is used for the elements having the same function described in the previous embodiments, and duplicated description is avoided.

The gas turbine according to the sixth embodiment is applied to a hybrid power system (not shown). In a hybrid power system, exhaust gas discharged from a gas turbine is sent to a heat recovery boiler, where the exhaust gas that is at high temperature and high pressure produces steam. The steam drives a steam turbine, so that a generator generates power. In the present embodiment, steam provided to the steam turbine is condensed by a condenser to produce water, and then, the water is returned to a heat recovery boiler as feedwater by a pump, thereby overheating the feedwater.

In the gas turbine according to the sixth embodiment that is applied to the hybrid power system, as shown in Fig. 8, the compressor 11 is connected to the combustor 12 via the compressed air supply line 43, and also is connected to the pressurizing device 41 via the compressed air branching line 44 that branches from some midpoint of the compressed air supply line 43. The pressurizing device 41 is connected to the combustor cooling device 42 via the cooling air supply line 45. A heat exchanger (compressed air cooling unit) 83 that cools the compressed air pressurized by the pressurizing device 41 is provided to the cooling air supply line 45. The combustor cooling device 42 cools the combustor 12 with the compressed air cooled by the heat exchanger 83. The compressed air that flows through the cooling air supply line 45 and feedwater that flows through a feedwater line 85 connected to the exhaust heat recovery boiler (exhaust heat recovering unit) are introduced into the exchanger 83, where heat exchange is performed between the compressed air and the feedwater. More specifically, the compressed air that flows through the cooling air supply line 45 after being compressed by the compressor 11 and pressurized by the pressurizing device 41 is at higher temperature and higher pressure than the feedwater that flows through the feedwater line 85 after driving the steam turbine and being condensed by the condenser, and thus, the compressed air pressurized by the pressurizing device 41 is cooled by the feedwater that is returned to an exhaust heat recovery boiler 84 when the compressed air flows through the exchanger 83. The combustor cooling device 42 is connected to the compressed air supply line 43 via the compressed air circulation line 46. The fuel supply line 47 is connected to the combustor 12, which in turn is connected to the turbine 13 via the combustion gas exhaust line 48.

Thus, the compressor 11 compresses air to produce compressed air that is at high temperature and high pressure, and the compressed air flows through the compressed air supply line 43. Some of the compressed air that flows the compressed air supply line 43 branches into the compressed air branching line 44, and is provided to the pressurizing device 41, where the compressed air is further pressurized. The compressed air that is further pressurized flows through the cooling air supply line 45. Then, the compressed air that is pressurized by the pressurizing device 41 is introduced into the heat exchanger 83 via the cooling air supply line 45, and the feedwater after driving the steam turbine and being condensed by the condenser after driving the steam turbine is also introduced thereinto via the feedwater line 85. In the heat exchanger 83, heat exchange is performed between the compressed air and the feedwater. The compressed air that is pressurized by the pressurizing device 41 is provided to the combustor cooling device 42 after being cooled by the exchanger 83, and then, the compressed air cools the combustor 12. The compressed air that is used to cool the combustor 12 is returned to the compressed air supply line 43 via the compressed air circulation line 46. Therefore, the total amount of the compressed air that is compressed by the compressor 11 is provided to the combustor 12 via the compressed air supply line 43.

Then, in the combustor 12, the compressed air that is provided from the compressed air supply line 43 is mixed with predetermined fuel provided from the fuel supply line 47, and the mixture is burned to produce combustion gas that is at high temperature and high pressure. The combustion gas is sent to the turbine 13 via the combustion gas exhaust line 48, where the combustion gas passes through the stator vanes 21 and the rotor vanes 22 to rotationally drive the rotor 25, which in turn drives the generator 14 connected to the rotor 25 to generate power.

Thus, the gas turbine according to the sixth embodiment includes the pressurizing device 41 that pressurizes some of the compressed air that is compressed by the compressor 11, the combustor cooling device 42 that cools the combustor 12 with the compressed air that is pressurized by the pressurizing device 41, the compressed air circulation line 46 that provides the compressed air that is used to cool the combustor 12 to the casing of the combustor 12, and the exchanger 83 that cools the compressed air that is pressurized by the pressurizing device 41 with the feedwater that is returned to the exhaust heat recovery boiler 84.

Thus, the compressed air that is compressed by the compressor 11 is provided to the combustor 12, and some of the compressed air is pressurized, cooled by the heat exchanger 83, and then, sent to the combustor cooling device 42. The compressed air that is sent to the combustor cooling device 42 cools the combustor 12, and the compressed air that is used to cool the combustor 12 is provided to the combustor 12 via the compressed air circulation line 46. In the combustor 12, the compressed air provided to the combustor 12 is mixed with fuel, and the mixture is burned to produce combustion gas. The combustion gas is provided to the turbine 13 to produce rotative power. Here, some of the compressed air that is compressed by the compressor 11 is pressurized and cooled, and then, cools the combustor 12. Therefore, the compressed air that is used to cool the combustor 12 alone becomes pressure loss. Thus, pressure loss of the compressed air can be minimized and the combustor 12 can be appropriately cooled. Because the compressed air that is used to cool the combustor 12 is returned to the compressed air supply line 43, the total amount of the compressed air that is compressed by the compressor 11 is provided to the combustor 12. Thus, the amount of the combustion gas is not reduced, and increase in emission level of NOx due to increase of the combustion temperature can be prevented. Because the compressed air is provided to the combustor cooling device 42 after being pressurized, a temperature of the compressed air can be lowered. Thus, the combustor 12 can be efficiently cooled and the compressed air that is at low temperature is provided to the interior of the combustor 12. Consequently, the combustion temperature can be lowered, and emission level of NOx can be reduced.

### Seventh Embodiment

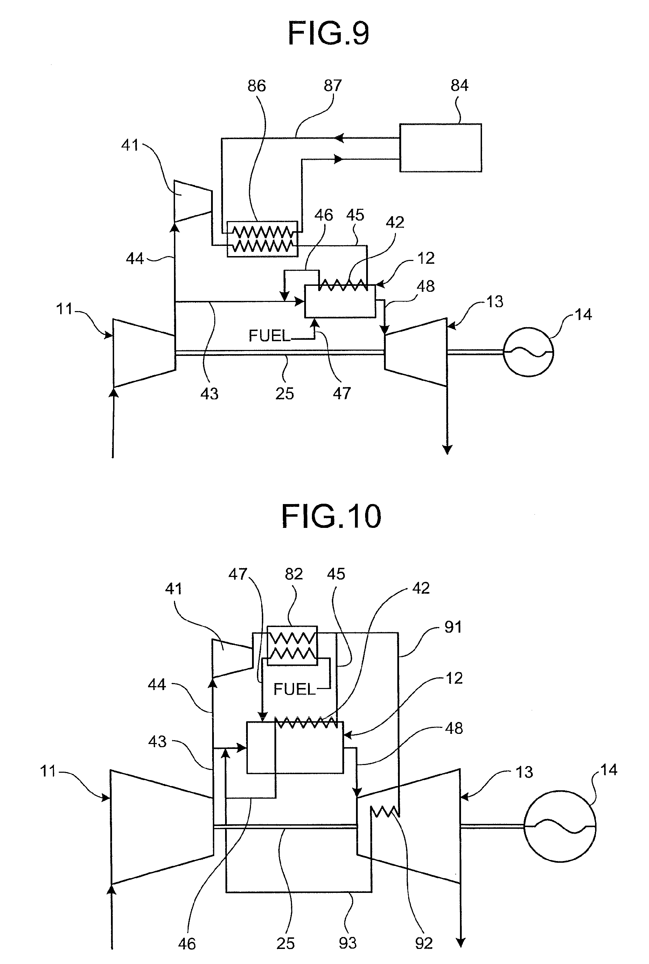

Fig. 9 is a schematic of a gas turbine according to a seventh embodiment of the present invention. The same reference symbol is used for the elements having the same function described in the previous embodiments, and duplicated description is avoided.

The gas turbine according to the seventh embodiment is applied to a hybrid power system (not shown). In a hybrid power system, exhaust gas discharged from a gas turbine is sent to a heat recovery boiler, where the exhaust gas that is at high temperature and high pressure produces steam. The steam drives a steam turbine, so that a generator generates power. In the present embodiment, steam provided to the steam turbine is condensed by a condenser to produce water, and then, is returned to a heat recovery boiler as feedwater by a pump, thereby overheating the feedwater.

In the gas turbine according to the seventh embodiment that is applied to the hybrid power system, as shown in Fig. 9, the compressor 11 is connected to the combustor 12 via the compressed air supply line 43, and also is connected to the pressurizing device 41 via the compressed air branching line 44 that branches from some midpoint of the compressed air supply line 43. The pressurizing device 41 is connected to the combustor cooling device 42 via the cooling air supply line 45. A heat exchanger (compressed air cooling unit) 86 that cools the compressed air pressurized by the pressurizing device 41 is provided to the cooling air supply line 45. The combustor cooling device 42 cools the combustor 12 with the compressed air cooled by the heat exchanger 86. The compressed air that flows through the cooling air supply line 45 and the steam that flows through a steam supply line 87 connected to the exhaust heat recovery boiler 84 are introduced into the exchanger 86, where heat exchange is performed between the compressed air and the steam. More specifically, the compressed air that flows through the cooling air supply line 45 after being compressed by the compressor 11 and pressurized by the pressurizing device 41 is at higher temperature and higher pressure than the steam that flows through the steam supply line 87 after being generated by the exhaust heat recovery boiler 84, and thus, the compressed air pressurized by the pressurizing device 41 is cooled by the steam generated by the exhaust heat recovery boiler 84 when the compressed air flows through the exchanger 86. The combustor cooling device 42 is connected to the compressed air supply line 43 via the compressed air circulation line 46. The fuel supply line 47 is connected to the combustor 12, which in turn is connected to the turbine 13 via the combustion gas exhaust line 48.

Thus, the compressor 11 compresses air to produce compressed air that is at high temperature and high pressure, and the compressed air flows through the compressed air supply line 43. Some of the compressed air that flows the compressed air supply line 43 branches into the compressed air branching line 44, and is provided to the pressurizing device 41, where the compressed air is further pressurized. The compressed air that is further pressurized flows through the cooling air supply line 45. Then, the compressed air pressurized by the pressurizing device 41 is introduced into the heat exchanger 86 via the cooling air supply line 45, and the steam generated by the exhaust heat recovery boiler 84 is also introduced thereinto via the steam supply line 87. In the heat exchanger 86, heat exchange is performed between the compressed air and the steam. The compressed air pressurized by the pressurizing device 41 is provided to the combustor cooling device 42 after being cooled by the exchanger 86, and then, the compressed air cools the combustor 12. The compressed air that is used to cool the combustor 12 is returned to the compressed air supply line 43 via the compressed air circulation line 46. Therefore, the total amount of the compressed air that is compressed by the compressor 11 is provided to the combustor 12 via the compressed air supply line 43.

Then, in the combustor 12, the compressed air provided from the compressed air supply line 43 is mixed with predetermined fuel that is provided from the fuel supply line 47, and the mixture is burned to produce combustion gas that is at high temperature and high pressure. The combustion gas is sent to the turbine 13 via the combustion gas exhaust line 48, where the combustion gas passes through the stator vanes 21 and the rotor vanes 22 to rotationally drive the rotor 25, which in turn drives the generator 14 connected to the rotor 25 to generate power.

Thus, the gas turbine according to the seventh embodiment includes the pressurizing device 41 that pressurizes some of the compressed air that is compressed by the compressor 11, the combustor cooling device 42 that cools the combustor 12 with the compressed air pressurized by the pressurizing device 41, the compressed air circulation line 46 that provides the compressed air that is used to cool the combustor 12 to the casing of the combustor 12, and the exchanger 86 that cools the compressed air that is pressurized by the pressurizing device 41 with the steam generated by the exhaust heat recovery boiler 84.

Thus, the compressed air that is compressed by the compressor 11 is provided to the combustor 12, and some of the compressed air is pressurized, cooled by the heat exchanger 86, and then, sent to the combustor cooling device 42. The compressed air sent to the combustor cooling device 42 cools the combustor 12, and the compressed air that is used to cool the combustor 12 is provided to the combustor 12 via the compressed air circulation line 46. In the combustor 12, the compressed air provided to the combustor 12 is mixed with fuel, and the mixture is burned to produce combustion gas. The combustion gas is provided to the turbine 13 to produce rotative power. Here, some of the compressed air that is compressed by the compressor 11 is pressurized and cooled, and then, cools the combustor 12. Therefore, the compressed air that is used to cool the combustor 12 alone becomes pressure loss. Thus, pressure loss of the compressed air can be minimized and the combustor 12 can be appropriately cooled. Because the compressed air that is used to cool the combustor 12 is returned to the compressed air supply line 43, the total amount of the compressed air that is compressed by the compressor 11 is provided to the combustor 12. Thus, the amount of the combustion gas is not reduced, and increase in emission level of NOx due to increase of the combustion temperature can be prevented. Because the compressed air is provided to the combustor cooling device 42 after being pressurized, a temperature of the compressed air can be lowered. Thus, the combustor 12 can be efficiently cooled and the compressed air that is at low temperature is provided to the interior of the combustor 12. Consequently, the combustion temperature can be lowered, and emission level of NOx can be reduced. Eighth Embodiment

Fig. 10 is a schematic of a gas turbine according to an eighth embodiment of the present invention. The same reference symbol is used for the elements having the same function described in the previous embodiments, and duplicated description is avoided.

In the gas turbine according to the eighth embodiment, as shown in Fig. 10, the compressor 11 is connected to the combustor 12 via the compressed air supply line 43, and also is connected to the pressurizing device 41 via the compressed air branching line 44 that branches from some midpoint of the compressed air supply line 43. The pressurizing device 41 is connected to the combustor cooling device 42 via the first cooling air supply line 45, and is also connected to a turbine cooling device (turbine cooling unit) 92 via a second cooling air supply line 91 that branches from the first cooling air supply line 45. The turbine cooling device 92 is, for example, a plurality of cooling passages formed within one step of the stator vane among a plurality of steps of stator vanes fixed to the rotor shaft of the turbine 13. The compressed air that is at low temperature flows through the cooling passages, and thus, the turbine cooling device 92 cools the turbine 13. The heat exchanger 82 that cools the compressed air pressurized by the pressurizing device 41 is provided to the cooling air supply line 45. These cooling devices 42 and 92 cool the combustor 12 and the turbine 13 with the compressed air cooled by the heat exchanger 82. The compressed air that flows through the cooling air supply line 45 and the fuel that flows through the fuel supply line 47 are introduced into the exchanger 82, where heat exchange is performed between the compressed air and the fuel, and the compressed air is cooled by the fuel. The combustor cooling device 42 is connected to the compressed air supply line 43 via the first compressed air circulation line 46, and the turbine cooling device 92 is connected to the compressed air supply line 43 via a second circulation line (second air-supplying unit) 93. The fuel supply line 47 is connected to the combustor 12, which in turn is connected to the turbine 13 via the combustion gas exhaust line 48.

Thus, the compressor 11 compresses air to produce compressed air that is at high temperature and high pressure, and the compressed air flows through the compressed air supply line 43. Some of the compressed air that flows through the compressed air supply line 43 branches into the compressed air branching line 44, and is provided to the pressurizing device 41, where the compressed air is further pressurized. The compressed air that is further pressurized flows through the cooling air supply line 45. Then, the compressed air that is pressurized by the pressurizing device 41 is introduced into the heat exchanger 81 via the cooling air supply line 45, and the fuel is introduced into the heat exchanger 82 via the fuel supply line 47. In the heat exchanger 82, heat exchange is performed between the compressed air and the fuel, and the compressed air pressurized by the pressurizing device 41 is cooled by the exchanger 82.

The compressed air that is cooled by the heat exchanger 82 is provided to the combustor cooling device 42 to cool the combustor 12, and is also provided to the turbine cooling device 92 to cool the turbine 13. On the other hand, the fuel is heated by the exchanger 82, and then, provided to the combustor 12. The compressed air that is used to cool the combustor 12 is returned to the compressed air supply line 43 via the compressed air circulation line 46. Therefore, the total amount of the compressed air compressed by the compressor 11 is provided to the combustor 12 via the compressed air supply line 43.

Then, in the combustor 12, the compressed air provided from the compressed air supply line 43 is mixed with heated predetermined fuel from the fuel supply line 47, and the mixture is burned to produce combustion gas that is at high temperature and high pressure. The combustion gas produced in the combustor 12 is sent to the turbine 13 via the combustion gas exhaust line 48. The combustion gas passes through the stator vanes 21 and the rotor vanes 22 to rotationally drive the rotor 25, which in turn drives the generator 14 connected to the rotor 25 to generate power.

Thus, the gas turbine according to the eighth embodiment includes the pressurizing device 41 that pressurizes some of the compressed air that is compressed by the compressor 11, the combustor cooling device 42 that cools the combustor 12 with the compressed air that is pressurized by the pressurizing device 41, the first compressed air circulation line 46 that provides the compressed air that is used to cool the combustor 12 to the casing of the combustor 12, the exchanger 82 that cools the compressed air that is pressurized by the pressurizing device 41 with the fuel that is provided to the combustor 12, the turbine cooling device 92 that cools the turbine 13 with the compressed air that is pressurized by the pressurizing device 41, and the second circulation line 93 that provides to the combustor 12 the compressed air that is used to cool the turbine 13.

Thus, the compressed air that is compressed by the compressor 11 is provided to the combustor 12, and some of the compressed air is pressurized by the pressurizing device 41, cooled by the heat exchanger 82, and then sent to the combustor cooling device 42 and the turbine cooling device 92. The compressed air sent to the combustor cooling device 42 and the turbine cooling device 92 cools the combustor 12 and the turbine 13, and the compressed air that is used to cool the combustor 12 and the turbine 13 is provided to the combustor 12 via the compressed air circulation lines 46 and 93. In the combustor 12, the compressed air is mixed with fuel, and the mixture is burned to produce combustion gas. The combustion gas is provided to the turbine 13 to produce rotative power. Here, some of the compressed air compressed by the compressor 11 is pressurized and cooled, and then, the compressed air cools the combustor 12 and the turbine 13. Because only the compressed air that is used to cool the combustor 12 and the turbine 13 becomes pressure loss, pressure loss of the compressed air can be minimized, and the combustor 12 can be appropriately cooled. Because the air that is used to cool the combustor 12 and the turbine 13 is returned to the compressed air supply line 43, the total amount of the compressed air compressed by the compressor 11 is provided to the combustor 12. Thus, the amount of the combustion gas is not reduced, and increase in emission level of NOx due to increase of the combustion temperature can be prevented. Furthermore, because the compressed air is provided to the combustor cooling devices 42 and 92 after being pressurized and cooled, a temperature of the compressed air can be lowered. Thus, the combustor 12 and the turbine 13 can be efficiently cooled and the compressed air that is at low temperature is provided to the interior of the combustor 12. Consequently, a temperature of the combustion gas can be lowered, and emission level of NOx can be reduced. The fuel is provided to the combustor 12 after the fuel is heated. Thus, particles of the fuel spray become smaller in size. As a result, the combustion efficiency is improved. Consequently, emission level of harmful substances can be reduced and a turbine output can be improved.

### INDUSTRIAL APPLICABILITY

The gas turbine according to the present invention uses some of the compressed air that is compressed by the compressor as combustor cooling air, and returns the compressed air that is used to cool the combustor to the combustor. Thus, in the gas turbine, pressure loss of the compressed air can be minimized, and the combustor can be appropriately cooled. An increase in emission level of NOx due to increase of the combustion temperature can also be prevented, and degradation of a power efficiency of the turbine can also be prevented. The gas turbine can be applied to any type of gas turbines.

## Claims

1. A gas turbine in which compressed air that is compressed by a compressor is mixed with fuel in a combustor, the mixture is burned to produce combustion gas, and the combustion gas is provided to a turbine to produce rotative power, the gas turbine comprising:
a pressurizing unit that pressurizes some of the compressed air that is compressed by the compressor;
a combustor cooling unit that cools the combustor with the compressed air that is pressurized by the pressurizing unit; and
a first air-supplying unit that supplies the compressed air that is used to cool the combustor to the combustor.

2. The gas turbine according to claim 1, further comprising a water adding unit that adds water to the compressed air that is pressurized by the pressurizing unit, wherein the combustor cooling unit cools the combustor with the compressed air to which water is added by the water adding unit.

3. The gas turbine according to claim 1, further comprising a compressed air cooling unit that cools the compressed air that is pressurized by the pressurizing unit, wherein the combustor cooling unit cools the combustor with the compressed air that is cooled by the compressed air cooling unit.

4. The gas turbine according to claim 3, wherein the compressed air cooling unit cools the compressed air that is pressurized by the pressurizing unit with the compressed air that is compressed by the compressor.

5. The gas turbine according to claim 3, wherein the compressed air cooling unit cools the compressed air that is pressurized by the pressurizing unit with the fuel to be provided to the combustor.

6. The gas turbine according to claim 3, further comprising an exhaust heat recovering unit that sends exhaust gas discharged by the turbine to a boiler to generate steam, sends the generated steam to a steam turbine to generate power, and returns cooled feedwater to the boiler to overheat the feedwater, wherein the compressed air cooling unit cools the compressed air that is pressurized by the pressurizing unit with the feedwater to be cooled and returned to the boiler.

7. The gas turbine according to claim 3, further comprising an exhaust heat recovering unit that sends exhaust gas discharged by the turbine to a boiler to generate steam, sends the generated steam to a steam turbine to generate power, and returns cooled feedwater to the boiler to overheat the feedwater, wherein the compressed air cooling unit cools the compressed air that is pressurized by the pressurizing unit with the feedwater generated in the boiler.

8. The gas turbine according to claim 1, wherein the pressurizing unit extracts from a casing some of the compressed air that is compressed by the compressor and pressurizes the compressed air, and the first air-supplying unit returns the compressed air that is used to cool the combustor to the casing.

9. The gas turbine according to claim 1, wherein the combustor cooling unit comprises a plurality of cooling passages formed within a wall portion of an inner liner included in the combustor.

10. The gas turbine according to claim 1, further comprising a turbine cooling unit that cools the turbine with the compressed air that is pressurized by the pressurizing unit and a second air-supplying unit that provides the compressed air that is used to cool the turbine to the combustor.
